# EUROPEAN PATENT SPECIFICATION

(11) **EP 2 037 315 B1**
(45) Date of publication and mention of the grant of the patent: **31.08.2016**
(21) Application number: 08015833.0
(22) Date of filing: 09.09.2008
(51) Int. Cl.: G02F 1/1334

(54) **Notebook**
Tragbarer Computer
Ordinateur portable

(30) Priority: 12.09.2007 US 853911
(43) Date of publication of application: 18.03.2009
(73) Proprietor: Dell Products, L.P., Round Rock, TX 78682-2244 (US)
(72) Inventor: Li Liao, Reynold, Austin, Texas 78731 (US); O'Neal, Sean P., Round Rock, Texas 78681 (US); Munteanu, Eugen, Austin, Texas 78729-4958 (US); Sultenfuss, Andrew T., Leander, TX 78641-8578 (US); Peana, Stefan, San Diego, California 92130 (US); Mundt, Kevin, Austin, Texas 78750 (US)
(74) Representative: Hess, Peter K. G.

(56) References cited:
- EP-A- 1 746 809
- JP-A- 2000 058 998
- JP-A- 2006 139 020
- JP-A- 2007 127 742
- US-A1- 2007 097 068

## Description

### Background of the Invention

### Field of the Invention

The present invention relates to information handling systems and more particularly to information handling systems that comprise a liquid crystal display (LCD) with light-emitting diode (LED) backlight.

### Description of the Related Art

As the value and use of information continues to increase, individuals and businesses seek additional ways to process and store information. One option available to users is information handling systems. An information handling system generally processes, compiles, stores, and/or communicates information or data for business, personal, or other purposes thereby allowing users to take advantage of the value of the information. Because technology and information handling needs and requirements vary between different users or applications, information handling systems may also vary regarding what information is handled, how the information is handled, how much information is processed, stored, or communicated, and how quickly and efficiently the information may be processed, stored, or communicated. The variations in information handling systems allow for information handling systems to be general or configured for a specific user or specific use such as financial transaction processing, airline reservations, enterprise data storage, or global communications. In addition, information handling systems may include a variety of hardware and software components that may be configured to process, store, and communicate information and may include one or more computer systems, data storage systems, and networking systems.

It is known to provide portable information handling systems (such as notebook information handling systems) with LCD type displays. LCD type displays include LCD panels that utilize an illumination system that is known as a backlight illumination system. With known LCD panels, the backlight illumination system is via a cold cathode fluorescent lamps (CCFL) bulb. Certain LCD panels are now using LEDs for backlight illumination. With known LCD panels that use LEDs for backlight illumination, a driver board for the LCD backlight assembly traverses the entire width of the LCD glass to allow flexible circuits to connect to the glass.

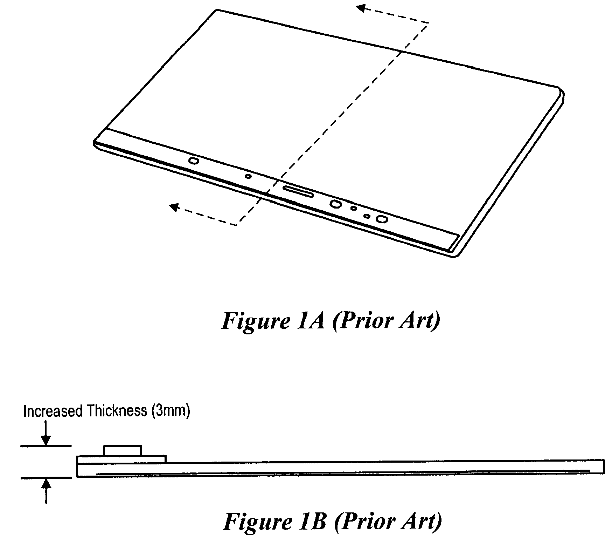

Known notebook display assemblies include a chassis, an LCD panel, an LED driver board, and hinges to connect the display assembly to the base of the notebook information handling system. The hinges are generally positioned in the bottom left and right corners of the display assembly. One issue relating to known LED driver boards is that to minimize the thickness of an LCD assembly, the driver board is often positioned below the glass panel (see e.g., Figures 1A and 1B, labeled Prior Art).

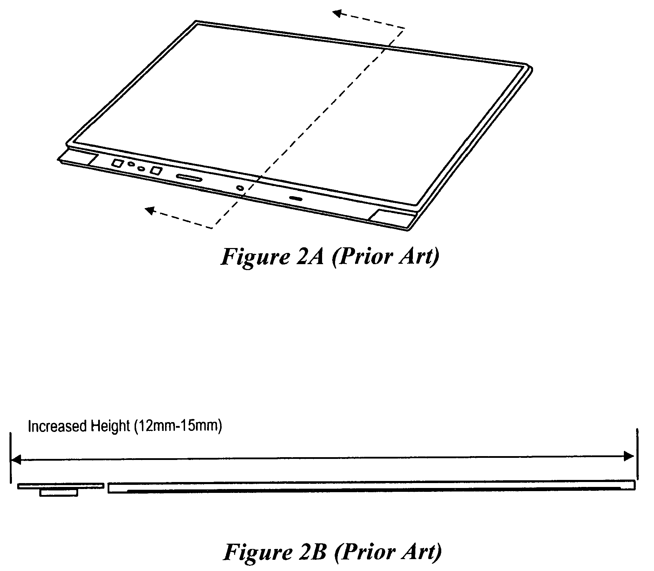

In known information handling systems, the driver board and the hinges are often positioned in the same location. Either to rectify interference of the driver board and the hinges, the system can be made larger in the Y-dimension or the driver board can be placed behind the glass panel (see e.g., Figures 2A and 2B, labeled Prior Art). The result of placing the driver board (which is populated with components for driving the LED backlight illumination system) behind the panel is that the Z-dimension of the display assembly is increased (e.g., by about 3mm in the location of the driver board).

Accordingly, it is desirable to provide a method that allows a LED driver board to both traverse the full width of the LCD glass and not occupy the volume occupied by the hinges.

The JP 2007 127742 A discloses a display device having a lighting lead wire which is expensive in a simple structure and easily subjected to design changes. The lighting lead wire comprises a flexible print cable to be connected to a LED opposing a liquid crystal cell is composed of a main lead wire having a LED, and an extended wire linearly connected to the main lead wire. The extended wire is disposed opposite to the main lead wire, having an approximately right angle between the wires by folding the boundary portion between the main leas wire and the extended line wire; and the center portion of the extended wire is folded so as to connect the end portion of the extended wire to the end portion of a cell driving the lead wire.

The JP 2000 058998 A describes a method to distribute an external stress acting of a mounting part by enlarging a thermo-compression mounting part and thermo-compression mounting a TCP (tape carrier package) onto a liquid crystal panel through an anisotropic conductive member thereby enlarging the thermo-compression area of the TCP and the liquid crystal panel. When a TCP package is mounted on a liquid crystal panel, it is mounted on electrodes formed on the board out of facing boards of the liquid crystal panel through anisotropic conductive adhesive. The thermo-compression mounting part of the TCP bonded with an IC-chip is formed in T-shape having opposite sides stretching outward wherein the mounting part is thermo-compressed to the board through anisotropic conductive adhesive while connecting the electrodes of the TCP and the board.

The JP 2006 139020 A refers to a electro-optic apparatus having a structure in which a terminal section of a wiring board is drawn out through an outer frame, the electro-optic apparatus in which a position for drawing out the terminal section is freely determined with simple processing. The electro-optic apparatus includes: the wiring board which is connected to a liquid crystal panel and which is bent at the back of the liquid crystal panel; a first outer frame which covers a back face of the liquid crystal panel and the wiring board in an area near a bend section of the wiring board; and a second frame which covers the back face to the liquid crystal panel in an area far from the bent section of the wiring board.

The JP 1 746 809 A2 discloses a mobile terminal comprising a frame, a flexible circuit wrapped around a portion of an edge of the frame, and a bracket located of an appropriate location between the frame and the flexible circuit along the edge of the frame. The bracket protects certain components of the flexible circuit during assembly of the mobile terminal and supports the frame during use of the mobile terminal.

The US 2007/0097068 A1 describes a display apparatus which includes a display panel, a light emitting element arranged as a light source for the display panel, a board on which a first circuit for controlling power supply to the light emitting element is arranged, and executes a process unrelated to a drive process of the display panel.

### Summary of the Invention

In accordance with the present invention a system and method that allows a LED driver board to both traverse the full width of the LCD glass and not occupy the volume occupied by the hinges is set forth. More specifically, by providing an LCD type display that includes an LED backlight illumination system, the LED driver board for a panel may be moved to the bottom side of a display assembly.

In one embodiment, the invention relates to an information handling system display assembly includes a display panel having a width, a display board assembly coupled to the processor and the display panel. The display board assembly includes a display board assembly coupled to the display panel on a display panel side of the display board and the display board has a wider portion extending the substantially width of the display panel and a narrow portion extending less than the width of the display panel, and a display component mounted on the display panel side of the display board.

In another embodiment, the invention relates to an information handling system display assembly that includes a processor, memory coupled to the processor, and a display assembly. The display assembly includes a display panel having a width, a display board assembly coupled to the processor and the display panel. The display board assembly includes a display board assembly coupled to the display panel on a display panel side of the display board and the display board has a wider portion extending the substantially width of the display panel and a narrow portion extending less than the width of the display panel, and a display component mounted on the display panel side of the display board.

### Brief Description of the drawings

The present invention may be better understood, and its numerous objects, features, and advantages made apparent to those skilled in the art by referencing the accompanying drawings. The use of the same reference number throughout the several figures designates a like or similar element.
- Figures 1A and 1B: labeled Prior Art, show a perspective view and a cross sectional view of a display driver printed circuit board positioned below an LCD panel.
- Figure 2A and 2B,: labeled Prior Art, show a perspective view and a cross sectional view of a display driver printed circuit board layered with an LCD panel.
- Figure 3: shows a system block diagram of an information handling system.
- Figure 4: shows a front perspective view of an LCD panel assembly.
- Figure 5: shows a rear perspective view of an LCD panel assembly.
- Figure 6: shows a cross section view of an LCD panel assembly.
- Figure 7: shows a perspective view of an LCD panel assembly including a wire channel.

### Detailed Description

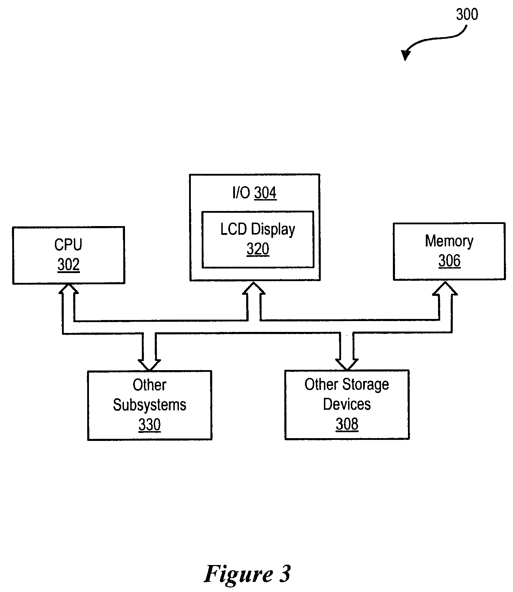

Referring briefly to Figure 3, a system block diagram of an information handling system 300 is shown. The information handling system 300 includes a processor 302, input/output (I/O) devices 304, such as a display, a keyboard, a mouse, and associated controllers, memory 306, including volatile memory such as random access memory (RAM) and non-volatile memory such as read only memory (ROM) and hard disk drives, and other storage devices 308, such as an optical disk and drive, and various other subsystems 310, all interconnected via one or more buses 312. The I/O devices 304 include an LCD display device 320

For purposes of this disclosure, an information handling system may include any instrumentality or aggregate of instrumentalities operable to compute, classify, process, transmit, receive, retrieve, originate, switch, store, display, manifest, detect, record, reproduce, handle, or utilize any form of information, intelligence, or data for business, scientific, control, or other purposes. For example, an information handling system may be a personal computer, a network storage device, or any other suitable device and may vary in size, shape, performance, functionality, and price. The information handling system may include random access memory (RAM), one or more processing resources such as a central processing unit (CPU) or hardware or software control logic, ROM, and/or other types of nonvolatile memory. Additional components of the information handling system may include one or more disk drives, one or more network ports for communicating with external devices as well as various input and output (I/O) devices, such as a keyboard, a mouse, and a video display. The information handling system may also include one or more buses operable to transmit communications between the various hardware components.

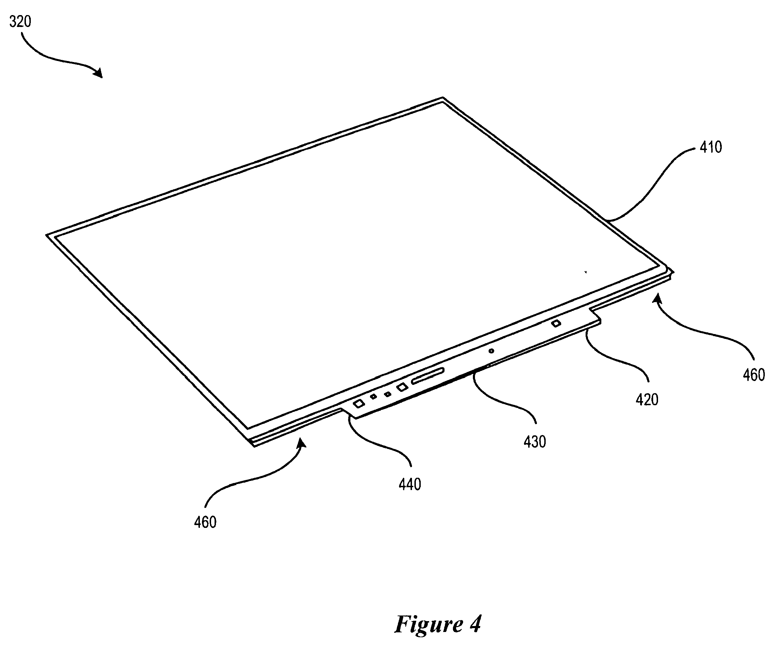

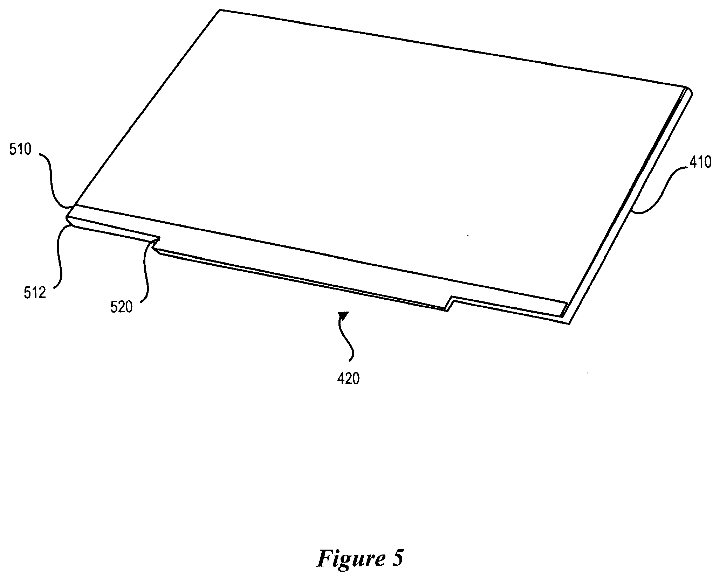

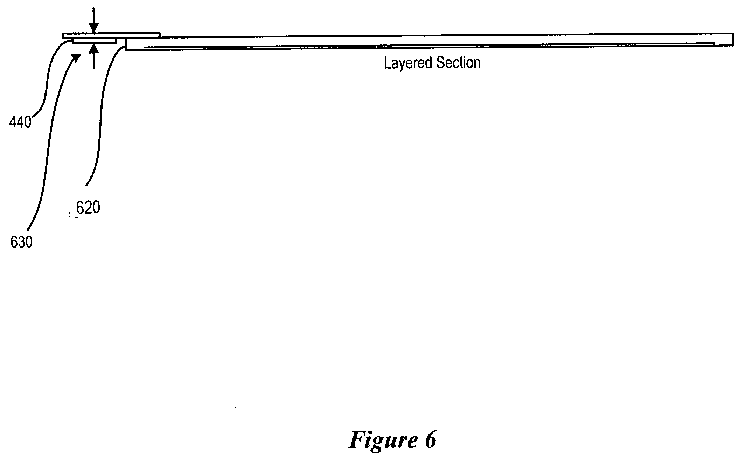

Referring to Figures 4 - 6, the LCD display device 320 includes an LCD panel 410 as well as a driver board assembly 420. The driver board assembly 420 includes an LED driver board 430 (which may be a printed circuit board) as well as components 440 mounted to the driver board 430.

The LED driver board 430 is a thickness of, e.g., approximately 0.8mm. When components 610 are mounted on the LED driver board 430, the total thickness of the driver board assembly 420 is, e.g., approximately 3.0mm.

The LED driver board 430 is configured in a T shape. The wide portion 510 of the T of the LED driver board 430 (i.e., the top of the T) traverses the width of the LCD panel 410. The under side 512 of the T cross bar is substantially flush with the bottom edge 620 of the glass of the LCD panel 410. The vertical portion 520 of the T (i.e., the base of the T) of the LED driver board protrudes below the bottom edge 620 of the glass. Components 440 of the LCD driver board assembly 420 are located on the portion 630 of the driver board assembly that protrudes below the edge 620 of the glass panel. The component portion of the driver board assembly need not traverse the entire width of the glass and can therefore be narrower than the width of the wider portion of the board. Accordingly, the portion of the driver board assembly that protrudes below the edge of the glass panel does not occupy the volume 460 of the panel assembly needed for the hinges. I.e., the T shape of the diver board defines spaces into which the hinges may be positioned.

This panel design allows the Y-dimension of the display assembly to be minimized to the dimension of the LCD glass plus the Y-dimension of the hinge volume. The display assembly thickness is only impacted by the 0.8mm addition of the LCD driver board that traverses behind the glass panel 410.

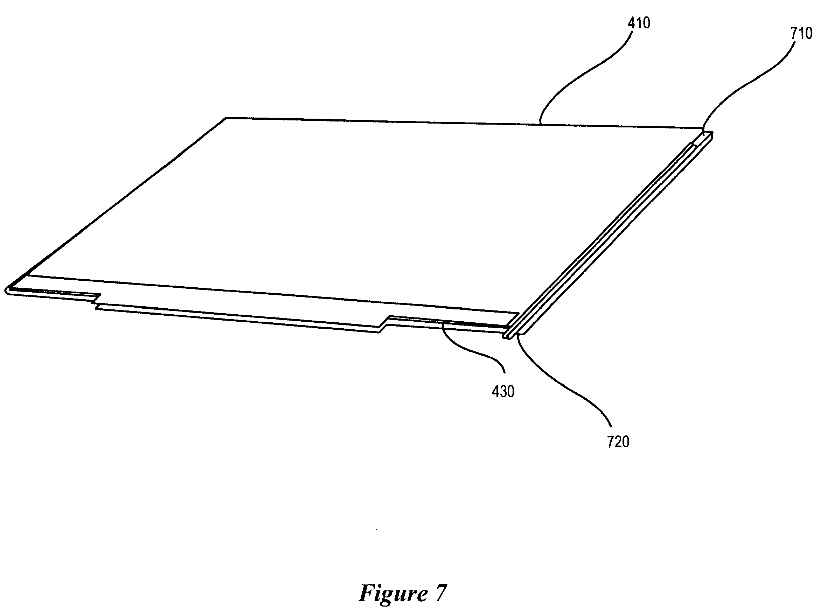

Referring to Figure 7, a perspective view of an LCD panel assembly including a wire channel is shown. More specifically, a light guide that is placed behind the LCD glass is utilized to illuminate the active area of the LCD glass. Often, there is unused (i.e., dead space) around the perimeter of the LCD glass for electrical connections and sealing of the glass panels (in certain embodiments, this space is approximately 5 mm). In certain embodiments, the light guide is reduced in size by approximately 4mm per side to create a channel 710 on the left and right sides of the panel 410. These channels can then be used for display assembly wire management.

Additionally, many notebook information handling systems have antennas positioned along the top edge of a display assembly. The wires that connect the antennas to the system base are coaxial wires that are 1.4mm in diameter. The non-populated driver board that traverses behind the LCD panel is 0.8mm thickness. The light guide has a thickness of approximately 1.2mm. By decreasing the total width of the light guide, a wire channel with a depth of about 2mm is created allowing for antenna wire runs 720 to the top edge of the display without affecting any of the display dimensions.

The present invention is well adapted to attain the advantages mentioned as well as others inherent therein. While the present invention has been depicted, described, and is defined by reference to particular embodiments of the invention, such references do not imply a limitation on the invention, and no such limitation is to be inferred. The invention is capable of considerable modification, alteration, and equivalents in form and function, as will occur to those ordinarily skilled in the pertinent arts. The depicted and described embodiments are examples only, and are not exhaustive of the scope of the invention.

For example, in certain embodiments, the illumination LEDs may be mounted directly to the driver board 420. Right angle LEDs mounted to the component side of the driver board are in the correct orientation to illuminate the edge of the light guide that is placed behind the LCD glass 410.

Consequently, the invention is intended to be limited only by the spirit and scope of the appended claims, giving full cognizance to equivalents in all respects.

## Claims

1. A notebook comprising:
hinges to connect a notebook information handling system display assembly (320) to a base of a notebook information handling system (300);
a display panel (410), the display panel (410) having a width;
a display board assembly (420) comprising a display board (430) and at least one display component (440) mounted on the display board (430);
the display board assembly (420) being coupled to the display panel (410) on a rear side of the display panel (410) with a side to which the at least one component (440) is mounted on the display board (430);
the display board (430) having a wider portion (510) extending substantially the width of the display panel (410) and a narrow portion (520) extending less than the width of the display panel (410);
wherein the wider portion (510) of the display board (430) and the narrower portion (520) of the display board (430) are contiguous; and
wherein the narrower portion (520) of the display board (430) protrudes below an edge of the display panel (410) thereby defining spaces into which the hinges are positioned.

2. The notebook of claim 1 wherein:
the display panel (410) comprises a depth; and,
when the display component (440) is mounted on the display board (430), the display component (440) protrudes no further than the depth of the display panel (410).

3. The notebook of claim 1 wherein:
the display board (430) corresponds to a T shape, the T shape having a top and a base; and,
the wider portion (510) of the display board (430) corresponds to the top of the T shape and the narrower portion (520) of the display board (430) corresponds to the base of the T shape.

4. The notebook of claim 1 wherein:
the display panel (410) comprises a liquid crystal display (LCD) panel.

5. The notebook according to claim 1, wherein the notebook information handling system further comprises:
a processor (302);
memory (306) coupled to the processor (302); and
wherein the display board assembly (420) is coupled to the processor (302) and the display panel (410).

## Patentansprüche

1. Ein Klapprechner, umfassend:
Scharniere zum Verbinden einer Display-Anordnung (320) eines Klapprechner-Informationsverarbeitungssystems mit einem Untersatz eines Klapprechner-Informationsverarbeitungssystems (300);
ein Display-Panel (410), wobei das Display-Panel (410) eine Breite aufweist;
eine Display-Platinen-Anordnung (420), die eine Display-Platine (430) und zumindest eine Display-Komponente (440) aufweist, welche an der Display-Platine (430) angebracht ist;
wobei die Display-Platinen-Anordnung (420) mit dem Display-Panel (410) auf einer Rückseite des Display-Panels (410) mit einer Seite verbunden wird, auf welcher die zumindest eine Komponente (440) auf der Display-Platine (430) angebracht ist;
wobei die Display Platine (430) einen breiten Teil (510) aufweist, der sich im Wesentlichen über die Breite des Display-Panels (410) erstreckt und einen schmalen Teil (520) aufweist, der sich über weniger als die Breite des Display-Panels (410) erstreckt;
wobei der breite Teil (510) der Display-Platine (430) und der schmälere Teil (520) der Display-Platine (430) zusammenhängend sind; und
wobei der schmälere Teil (520) der Display-Platine (430) unter einer Kante des Display-Panels (410) hervorsteht, wodurch Räume definiert werden, in die die Scharniere positioniert sind.

2. Der Klapprechner nach Anspruch 1, wobei:
das Display-Panel (410) eine Tiefe umfasst; und
falls die Display-Komponente (440) auf der Display-Platine (430) angebracht ist, die Display-Komponente (440) nicht über die Tiefe des Display-Panels (410) hinausragt.

3. Der Klapprechner nach Anspruch 1 wobei:
die Display-Platine (430) eine T-förmige Form aufweist, wobei die T-förmige Form ein Oberteil und ein Unterteil aufweist; und
wobei der breitere Teil (510) der Display-Platine (430) dem Oberteil der T-förmigen Form und der schmälere Teil (520) der Display-Platine (430) dem Unterteil der T-förmigen Form entspricht.

4. Der Klapprechner nach Anspruch 1, wobei:
das Display-Panel (410) ein Flüssigkristall- (LCD) Panel umfasst.

5. Der Klapprechner nach Anspruch 1, wobei das Klapprechner-Informationsverarbeitungssystem ferner umfasst:
einen Prozessor (302);
einen Speicher (306), der mit dem Prozessor verbunden ist; und
wobei die Display-Platinen-Anordnung (420) mit dem Prozessor (302) und dem Display-Panel (410) verbunden ist.

## Revendications

1. Un micro-ordinateur portable comprenant :
des charnières pour relier un ensemble d'affichage de système de traitement d'information de micro-ordinateur portable (320) à une base d'un système de traitement d'information de micro-ordinateur portable (300);
un panneau d'affichage (410), le panneau d'affichage (410) possédant une largeur ;
un ensemble de tableau d'affichage (420) comprenant un tableau d'affichage (430) et au moins un composant d'affichage (440) monté sur le tableau d'affichage (430) ;
l'ensemble de tableau d'affichage (420) étant couplé au panneau d'affichage (410) sur un côté arrière du panneau d'affichage (410) par un côté auquel le au moins un composant (440) est monté sur le tableau d'affichage (430) ;
le tableau d'affichage (430) possédant une portion plus large (510) s'étendant sensiblement sur la largeur du panneau d'affichage (410) et
une portion étroite (520) s'étendant sur moins de la largeur du panneau d'affichage (410) ;
la portion plus large (510) du tableau d'affichage (430) et la portion plus étroite (520) du tableau d'affichage (430) étant contiguës ; et
la portion plus étroite (520) du tableau d'affichage (430) faisant saillie sous une arête du panneau d'affichage (410), définissant ainsi des espaces dans lesquels les charnières sont positionnées.

2. Le micro-ordinateur portable de la revendication 1, dans lequel :
le panneau d'affichage (410) possède une profondeur ; et
quand le composant d'affichage (440) est monté sur le tableau d'affichage (430), le composant d'affichage (440) ne fait pas saillie au-delà de la profondeur du panneau d'affichage (410).

3. Le micro-ordinateur portable de la revendication 1, dans lequel :
le tableau d'affichage (430) correspond à une forme en T, la forme en T possédant un sommet et une base ; et
la portion plus large (510) du tableau d'affichage (430) correspond au sommet de la forme en T, et la portion plus étroite (520) du tableau d'affichage (430) correspond à la base de la forme en T.

4. Le micro-ordinateur portable de la revendication 1, dans lequel :
le panneau d'affichage (410) comprend un panneau à affichage à cristaux liquides (LCD).

5. Le micro-ordinateur portable selon la revendication 1, dans lequel le système de traitement d'information de micro-ordinateur portable comprend en outre :
un processeur (302) ;
une mémoire (306) couplée au processeur (302) ; et
l'ensemble de tableau d'affichage (420) étant couplé au processeur (302) et au panneau d'affichage (410).
